# EUROPEAN PATENT APPLICATION

(11) **EP 4 622 047 A1**
(43) Date of publication of application: **24.09.2025**
(21) Application number: 24753666.7
(22) Date of filing: 08.02.2024
(51) Int. Cl.: H02J 7/00, H01M 10/44, H01M 10/42

(54) **BATTERY SYSTEM AND CONTROL METHOD THEREOF**

(30) Priority: 08.02.2023 KR 20230016828
(71) Applicant: Samsung Electronics Co., Ltd., Suwon-si, Gyeonggi-do 16677 (KR)
(72) Inventor: KANG, Shinho, Suwon-si, Gyeonggi-do 16677 (KR); KIM, Moonyoung, Suwon-si, Gyeonggi-do 16677 (KR); KIM, Jeongwoo, Suwon-si, Gyeonggi-do 16677 (KR); KANG, Jeongil, Suwon-si, Gyeonggi-do 16677 (KR); JOO, Sungyong, Suwon-si, Gyeonggi-do 16677 (KR)
(74) Representative: Walaski, Jan Filip
(86) International application number: PCT/KR2024/001913
(87) International publication number: WO 2024/167345

(57) **Abstract**

A battery system includes: a charging circuit comprising a bidirectional charger and a main processor; and a plurality of battery packs, wherein each of the plurality of battery packs comprises a battery cell and a battery processor, wherein the main processor is configured to transmit, by using the bidirectional charger, to the battery processor of each of the plurality of battery packs, a charging signal to charge the battery cell of each of the plurality of battery packs, wherein the battery processor is configured to: based on receiving the charging signal, sequentially perform constant current (CC) charging of each of the plurality of battery packs according to a predefined order, and based on the CC charging of the plurality of battery packs being completed, simultaneously perform constant voltage (CV) charging of each of the plurality of battery packs.

## Description

### [Technical Field]

The disclosure relates to a battery system and a method of controlling thereof and, more particularly, to a battery system capable of charging and discharging a plurality of battery packs and a method of controlling thereof.

### [Background Art]

**In** recent years, with the development of technologies particularly related to an electric vehicle, the development of a battery (that is, a secondary battery), which is a power source of an electric vehicle, is accelerating. However, when mounting a battery on an electric vehicle, it is important to simplify the design of a battery pack, reduce the weight, and improve the efficiency of charging and discharging the battery pack.

In the related art, in an extendable battery system capable of increasing a charging capacity by combining a plurality of battery packs, each of the plurality of battery packs includes a bidirectional charger, and a separate dedicated cable for connecting the plurality of battery packs to each other is required. However, the design of the extendable battery system of the related art is complex, which may increase its weight and manufacturing cost.

Also, in the related art, constant current (CC) charging and constant voltage (CV) charging of a second battery pack are performed after all the CC charging and CV charging of a first battery pack are completed. Thus, there are issues that a lot of charging time is required, and it is difficult to check faults and capacities of the battery packs.

### [Disclosure of Invention]

### [Solution to Problem]

Provided are a battery system capable of efficiently charging and discharging a plurality of battery packs, and a control method thereof.

According to an aspect of the disclosure, a battery system includes: a charging circuit comprising a bidirectional charger and a main processor; and a plurality of battery packs, wherein each of the plurality of battery packs comprises a battery cell and a battery processor, wherein the main processor is configured to transmit, by using the bidirectional charger, to the battery processor of each of the plurality of battery packs, a charging signal to charge the battery cell of each of the plurality of battery packs, wherein the battery processor is configured to: based on receiving the charging signal, sequentially perform constant current (CC) charging of each of the plurality of battery packs according to a predefined order, and based on the CC charging of the plurality of battery packs being completed, simultaneously perform constant voltage (CV) charging of each of the plurality of battery packs.

The plurality of battery packs may include a first battery pack directly connected to the charging circuit and a second battery pack disposed at an end in a direction opposite to the first battery pack, and wherein the battery processor may be further configured to: sequentially perform the CC charging of each of the plurality of battery packs from the first battery pack to the second battery pack, and based on the CC charging for the second battery pack being completed, simultaneously perform CV charging for each of the plurality of battery packs.

Each of the plurality of battery packs may include a battery management circuit configured to obtain information about a state of the battery cell, and wherein the battery processor may be further configured to perform the CC charging and the CV charging by transmitting, to the battery management circuit, a switching signal to control a switching element connected to the battery cell.

The charging circuit and the plurality of battery packs may be serially connected through a plurality of connectors, and each of the plurality of connectors may include a plurality of signal connection lines.

A discharging signal for discharging the battery cell of each of the plurality of battery packs may be transmitted to the plurality of battery packs through at least one connector among the plurality of connectors, and wherein the battery processor may be further configured to, based on receiving the discharging signal, sequentially perform discharging of each of the plurality of battery packs from the second battery pack to the first battery pack.

The battery system may further include a communication interface, wherein the battery processor may be further configured to: based on receiving, from the battery management circuit, information about a remaining capacity of the battery cell of each of the plurality of battery packs, by summing up the information about the remaining capacity of the battery cell, obtain information about total remaining capacity indicating a remaining capacity of a total battery cell by summing up the information about the remaining capacity of the battery cell, transmit, to the main processor, the information about the total remaining capacity through at least one connector among the plurality of connectors, and wherein the main processor may be further configured to control the communication interface to transmit the information about the total remaining capacity to an external device.

The battery system may further include: a communication interface, wherein the battery processor may be further configured to: after receiving, from the battery management circuit, information about whether the battery cell of each of the plurality of battery packs has failed, transmit, to the main processor, information about whether a failure occurs in the battery cell through at least one connector among the plurality of connectors, and wherein the main processor may be further configured to control the communication interface to transmit the information about whether the failure occurs to an external device.

According to an aspect of the disclosure, a method of controlling a battery system, wherein the battery system comprises a charging circuit comprising a bidirectional charger and a main processor, and a plurality of battery packs each comprising a battery cell and a battery processor, the method includes: receiving a charging signal to charge the battery cell of each of the plurality of battery packs by using the bidirectional charger; based on receiving the charging signal, sequentially performing constant current (CC) charging of each of the plurality of battery packs based on a predefined order; and based on the CC charging of the plurality of battery packs being completed, simultaneously performing constant voltage (CV) charging of each of the plurality of battery packs.

The plurality of battery packs may include a first battery pack directly connected to the charging circuit and a second battery pack disposed at an end in a direction opposite to the first battery pack, wherein the performing the CC charging may include sequentially performing the CC charging of each of the plurality of battery packs from the first battery pack to the second battery pack, and wherein the performing the CV may include, based on the CC charging for the second battery pack being completed, simultaneously performing CV charging for each of the plurality of battery packs.

Each of the plurality of battery packs may further include a battery management circuit configured to obtain information about a state of the battery cell, and wherein the performing the CC charging may further include performing the CC charging by transmitting, to the battery management circuit, a switching signal to control a switching element connected to the battery cell, and wherein the performing the CV charging may include performing the CC charging by transmitting the switching signal to the battery management circuit.

The charging circuit and the plurality of battery packs may be serially connected through a plurality of connectors comprising a plurality of signal connection lines.

The method may further include: receiving a discharging signal to discharge the battery cell of each of the plurality of battery packs, using the bidirectional charger; and based on receiving the discharging signal, sequentially performing discharging of each of the plurality of battery packs from the second battery pack to the first battery pack.

The method may further include: receiving, from the battery management circuit of each of the plurality of battery packs, information about a remaining capacity of the battery cell of each of the plurality of battery packs; obtaining information about total remaining capacity indicating a remaining capacity of a total battery cell by summing up information about the remaining capacity of each of the plurality of battery packs; and transmitting, to an external device, the information about the total remaining capacity.

The method may further include: receiving, from the battery management circuit of each of the plurality of battery packs, information about whether the battery cell of each of the plurality of battery packs has failed, and transmitting, to an external device, information about whether a failure occurs in the battery cell.

### [Brief Description of Drawings]

The above and other aspects, features, and advantages of certain embodiments of the disclosure will be more apparent from the following description taken in conjunction with the accompanying drawings, in which:
FIG. 1 is a block diagram schematically illustrating a configuration of a battery system according to an embodiment of the disclosure;
FIG. 2 is a diagram illustrating in detail a flow of signals transmitted within a battery system along with a configuration of a battery system according to an embodiment of the disclosure;
FIG. 3 is a flowchart illustrating a charging process according to an embodiment of the disclosure;
FIGS. 4A and 4B are timing diagrams illustrating signals of a charging process according to an embodiment of the disclosure;
FIG. 5 is a flowchart illustrating a discharge process according to an embodiment of the disclosure;
FIG. 6 is a timing diagram illustrating signals of a discharging process according to an embodiment of the disclosure;
FIG. 7 is a timing diagram illustrating a discharging process during charging according to an embodiment of the disclosure;
FIGS. 8A and 8B are timing diagrams illustrating a charging process during discharge according to an embodiment of the disclosure; and
FIG. 9 is a flowchart illustrating a method of controlling a battery system according to an embodiment of the disclosure.

### [Mode for Invention]

Hereinafter, various example embodiments of the disclosure will be described in greater detail with reference to the accompanying drawings. However, the disclosure is not limited to the embodiments described hereinafter, but also includes various modifications, equivalents, and/or alternatives to these embodiments. In relation to explanation of the drawings, similar drawing reference numerals may be used for similar elements.

In the following description, a detailed description of the related art may be omitted when it is determined that such description may obscure the gist of the disclosure.

In addition, the embodiments described below may be modified in various different forms, and the scope of the technical concept of the disclosure is not limited to the following embodiments. Rather, these embodiments are provided so that this disclosure will be thorough and complete, and will fully convey the scope of the disclosure to those skilled in the art.

The terms used herein are to describe certain embodiments and are not intended to limit the scope of claims. A singular expression includes a plural expression unless otherwise specified.

In this specification, expressions such as "have," "may have," "include," "may include" or the like represent presence of a corresponding feature (for example, components such as numbers, functions, operations, or parts) and does not exclude the presence of additional feature.

In this disclosure, expressions such as "at least one of A [and/or] B," or "one or more of A [and/or] B," include all possible combinations of the listed items. For example, "at least one of A and B," or "at least one of A or B" includes any of (1) at least one A, (2) at least one B, or (3) at least one A and at least one B.

As used herein, the terms "first," "second," or the like may denote various components, regardless of order and/or importance, and may be used to distinguish one component from another, and does not otherwise limit the components.

If it is described that a certain element (e.g., first element) is "operatively or communicatively coupled with/to" or is "connected to" another element (e.g., second element), it should be understood that the certain element may be connected to the other element directly or through still another element (e.g., third element).

On the other hand, if it is described that a certain element (e.g., first element) is "directly coupled to" or "directly connected to" another element (e.g., second element), it may be understood that there is no element (e.g., third element) between the certain element and the another element.

The expression "configured to" used in the disclosure may be interchangeably used with other expressions such as "suitable for," "having the capacity to," "designed to," "adapted to," "made to," and "capable of," depending on cases. Meanwhile, the term "configured to" does not necessarily refer to a device being "specifically designed to" in terms of hardware.

Instead, under some circumstances, the expression "a device configured to" may refer, for example, to the device being "capable of" performing an operation together with another device or component. For example, the phrase "a processor configured to perform A, B, and C" may refer, for example, to a dedicated processor (e.g., an embedded processor) for performing the corresponding operations, or a generic-purpose processor (e.g., a central processing unit (CPU) or an application processor) that can perform the corresponding operations by executing one or more software programs stored in a memory device.

The term such as "module," "unit," "part", and so on may refer, for example, to an element that performs at least one function or operation, and such element may be implemented as hardware or software, or a combination of hardware and software. Further, except for when each of a plurality of "modules", "units", "parts", and the like needs to be realized in an individual hardware, the components may be integrated in at least one module and be realized in at least one processor.

Various elements and regions in the figures may be shown out of scale. Accordingly, the scope of the disclosure is not limited by the relative sizes or spacing drawn from the accompanying drawings.

Hereinafter, with reference to the attached drawings, embodiments will be described in detail so that those skilled in the art to which the disclosure belongs to can easily make and use the embodiments.

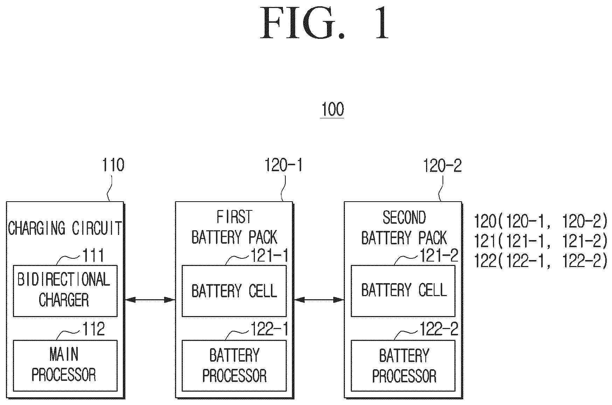

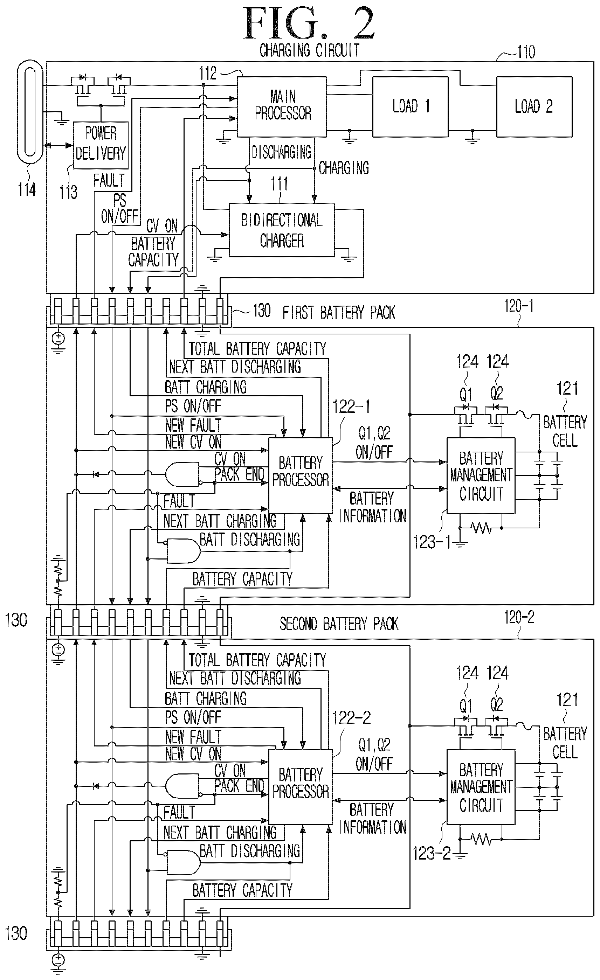

FIG. 1 is a block diagram schematically illustrating a configuration of a battery system 100 according to an embodiment of the disclosure. Further, FIG. 2 is a diagram illustrating in detail the flow of a signal transmitted in the battery system 100 together with the configuration of the battery system 100, according to an embodiment of the disclosure. Hereinafter, the battery system 100 according to the disclosure will be described in detail with reference to FIGS. 1 and 2.

According to the disclosure, the battery system 100 refers to a system capable of charging and discharging a plurality of battery packs 120 (e.g., a first battery pack 120-1, a second battery pack 120-2). That is, the battery system 100 refers to an extendable battery system 100 that may increase a charging capacity by combining a plurality of battery packs 120. For example, the battery system 100 may be the battery system 100 for an electric vehicle, but the battery system 100 according to the disclosure has no particular limitation regarding that the battery system 100 is a system for supplying power to which device.

As illustrated in FIG. 1, the battery system 100 according to the disclosure may include a charging circuit 110 and a plurality of battery packs 120.

The charging circuit 110 refers to a configuration to charge a plurality of battery packs 120. As illustrated in FIG. 1, the charging circuit 110 may include a bidirectional charger 111 and a main processor 112. As illustrated in FIG. 2, the charging circuit 110 may further include a power delivery 113 and a power port 114.

The bidirectional charger 111 may charge and discharge the battery. The bidirectional changer 111 may bring an energy from a source and store the same in the battery, and unlike a unidirectional charger that may not discharge a battery, the bidirectional charger 111 may bring stored energy from a battery and provide the energy to load. The number of the bidirectional charger 111 included in the charging circuit 110 may be one or plural, and there is no specific limitation in the specification including the maximum output of the bidirectional charger 111.

The main processor 112 may control the overall operation of the battery system 100 according to the disclosure. Specifically, the main processor 112 may transmit, to the battery processor 122 (e.g., a first battery processor 122-1, a second battery processor 122-2) included in the plurality of battery packs 120, a charging signal for charging the battery cells 121 (e.g., a first battery cell 121-1, a second battery cell 121-2) included in each of the plurality of battery packs 120 by using the bidirectional charger 111. In addition, the main processor 112 may transmit a discharging signal for discharging the battery cells 121 included in each of the plurality of battery packs 120 to the battery processor 122 included in the plurality of battery packs 120 by using the bidirectional charger 111.

The main processor 112 may transmit a 'PS ON' signal, which is a control signal for operating the battery system 100 in an operation mode, or a 'PS OFF' signal, which is a control signal for operating the battery system 100 in a standby mode. FIG. 2 illustrates a process in which the PS ON signal or the PS OFF signal is transmitted to the battery processor 122 included in each of a plurality of battery packs 120.

The processor 112 may be implemented in various ways. For example, the processor 112 may be implemented as at least one of an application specific integrated circuit (ASIC), an embedded processor, a microprocessor, a hardware control logic, a hardware finite state machine (FSM), a digital signal processor (DSP), or the like. Further, the term 'main processor 112' may include at least one of a central processing unit (CPU), a graphic processing unit (GPU), a main processing unit (MPU), or the like.

The power delivery 113 is configured to supply power to the bidirectional charger 111. For example, the power delivery 113 may be implemented as a universal serial bus (USB) power delivery (PD) for supplying power to a device having a USB port through the USB cable.

The power port 114 is configured to supply power to the charging circuit 110. For example, the power port 114 may be a USB port using USB that is one of an input/output standard protocol, but the embodiment is not limited thereto.

The plurality of battery packs 120 may refer to a set of battery packs 120 capable of performing a specific function by including various configurations together with the battery cells 121. As shown in FIG. 1, each of the plurality of battery packs 120 may include the battery cell 121 and the battery processor 122. Also, as shown in FIG. 2, the battery pack 120 may include a battery management circuit 123 and a switching element 124. Hereinafter, a case in which each of the plurality of battery packs 120 is the same type of battery pack 120 will be assumed and described, but according to an embodiment, the battery pack 120 in which a component that does not affect the operation according to the disclosure is added or changed may be included in the plurality of battery packs 120.

In FIGS. 1 and 2, the plurality of battery packs 120 include the first battery pack 120-1 and the second battery pack 120-2, which are two battery packs 120, but this is merely an embodiment. That is, the number of the plurality of battery packs 120 according to the disclosure is not limited to a particular number, and even when the number of the plurality of battery packs 120 is greater than or equal to three, one or more embodiments as described below may be applied similarly.

The battery cell 121 is an individual battery constituting the battery pack 120, and the battery cell 121 may be a secondary battery that is reusable through charging even after discharging. In particular, the battery cell 121 is a lithium ion battery and may be, for example, NCM (Lithium Nickel Cobalt Manganese Oxide, e.g., LiNiCoMnO2), LFP (Lithium Iron Phosphate, e.g., LiFePO4/C), LNMO (Lithium Nickel Manganese Spinel, e.g., LiNi0.5Mn1.5O4), NCA (Lithium Nickel Cobalt Aluminum Oxide, e.g., LiNiCoAlO2), or the like. There is no particular restriction to a type of the battery cell 121 included in each of a plurality of battery packs 120. The battery cell may refer to a configuration in which a plurality of battery cells are connected as illustrated in FIG. 2, but in this disclosure, a term battery cell 121 will be used to refer to one or more battery cells (e.g., the first battery cell 121-1 and the second battery cell 121-2).

The battery processor 122 may control charging and discharging of the battery cell 121. According to the disclosure, the battery processor 122 may perform charging and discharging by transmitting a switching signal to control the switching element 124 connected to the battery cell 121 to the battery management circuit 123. Accordingly, the battery cell may convert the supplied electrical energy to a type of chemical energy and store the same, and then, may convert chemical energy to electrical energy to supply power to the electronic apparatus connected to the battery system 100 and provide the same.

Also, the battery processor 122 may obtain information about the state of the battery cell 121 through the battery management circuit 123 and transmit information about the state of the battery to the main processor 112. The battery processor 122 may be implemented as a (so-called) microcontroller unit (MCU) or a microcontroller, but the type of the battery processor 122 is not particularly limited.

The plurality of battery processors 122 included in each of a plurality of battery packs 120 may be integrated with the main processor 112 into one, but when implemented as one integrated processor, the design thereof may consider that the amount of calculation to be performed by one integrated processor increases and speed of calculation may be degraded.

The battery management circuit 123 refers to a configuration capable of obtaining information about a state of the battery cell 121. In an embodiment, the battery management circuit 123 may detect remaining capacity of the battery cell 121 and fault of the battery cell 121, and may transmit, to the battery processor 122 included in the corresponding battery pack 120, the state information like information about a remaining capacity and fault state, or the like. **In** addition, the battery management circuit 123 may monitor a state such as voltage, current, and so on, of the battery cell 121. The battery management circuit 123 may be referred to as so-called battery management system (BMS), and in describing the disclosure, the term 'battery management circuit 123' will be used to clearly indicate that the circuit is an individual circuit included in the battery system 100.

The switching element 124 refers to a configuration to open and close charging or discharging of the battery cell 121. As shown in the example of FIG. 2, two switching elements 124 may be implemented as two per the battery pack 120, and may operate based on a switching signal generated by the battery processor 122. Specifically, the battery processor 122 may transmit, to the battery management circuit 123, a switching signal for controlling the switching element 124 connected to the battery cell 121 so that the switching element 124 may be turned on or off.

In an embodiment, one battery pack 120 (e.g., the first battery pack 120-1) among the plurality of battery packs 120 may be connected to the charging circuit 110 through the connector 130, and the plurality of battery packs 120 may also be connected through the connector 130. Specifically, referring to the example of FIG. 2, each of the plurality of batteries may be connected in series through a plurality of connectors 130 each including a plurality of signal connection lines. That is, the plurality of battery packs 120 according to the disclosure may not be connected through a separate dedicated battery connection cable and may be connected through the connector 130.

The battery system 100 may further include a housing for protecting the charging circuit 110 and the plurality of battery packs 120; an insulation for preventing shortcircuits, a circuit for connecting components inside the battery system 100, a cooler for preventing overheating of the battery system 100, and the like.

The charging circuit 110 and the configurations included in a plurality of battery packs 120 are described above. One or more embodiments implemented through the charging circuit 110 and the plurality of battery packs 120 will be described below.

The main processor 112 may generate a charging signal or a discharging signal based on the occurrence of an event to perform charging or discharging, and may transmit the generated charging signal or discharging signal to the battery processor 122 included in one battery pack 120 among a plurality of battery packs 120.

For example, when an event for performing charging occurs, such as an event in which the charging circuit 110 is connected to an external power providing device through the power port 114, the main processor 112 may generate a charging signal and transmit the generated charging signal to the first battery processor 122 of the first battery pack 120-1 directly connected to the charging circuit 110 among the plurality of battery packs 120.

When an event for performing discharging like an event in which the power of the electronic device connected to the battery system 100 occurs, the main processor 112 may generate a discharging signal, and may transmit the generated discharging signal to the second battery processor 122 of the second battery pack 120-2 disposed at an end in the opposite direction of the first battery pack 120-1 among the plurality of battery packs 120.

In the description of FIG. 1 and FIG. 2, the battery pack 120 directly connected to the charging circuit 110 among the plurality of battery packs 120 is referred to as "the first battery pack 120-1." The battery pack 120 disposed at an end opposite to the first battery pack 120-1 among the plurality of battery packs 120 is referred to as "a second battery pack 120-2". In addition, the battery processor 122 included in the first battery pack 120-1 is referred to as "the first battery processor 122-1," and the battery processor 122 included in the second battery pack 120-2 is referred to as "the second battery processor 122-2".

According to the disclosure, the charging of the battery cell 121 is performed based on a (so-called) CC-CV charging method, and the discharging the battery cell 121 may be performed based on a (so-called) CC charging method. The CC-CV charging method is mainly used for charging a lithium ion battery. The CC-CV charging method refers to a method of performing CV charging first, and then, when the CC charging method is completed, the CV charging is performed. Here, the CC charging method refers to a method of performing charging while constantly maintaining a current to a predetermined amperes (A). The CV charging method refers to a method of performing charging while constantly maintaining a voltage with a predetermined bolt (V).

In an embodiment, the current flowing to the battery cell 121 is constantly maintained while the CC charging is performed, and thus, the voltage inside the battery cell 121 continuously rises. Therefore, when a predetermined time elapses after CC charging is performed or a voltage inside the battery cell 121 reaches a threshold value, the CV charging is performed as a method of reducing an amount of current while constantly maintaining a voltage to prevent an overvoltage. During discharging, the CC discharging is performed to constantly maintain a current, thereby preventing overcurrent and producing a constant output.

As described above, the battery system 100 according to the disclosure may include the bidirectional charger 111 only in the charging circuit 110. In contrast, in the related art, each of the plurality of battery packs 120 includes a bidirectional charger. Therefore, the disclosure recites a method of efficiently charging battery cells of each of the plurality of battery packs 120 using the bidirectional charger 111 included only in the charging circuit 110.

When the output of the bidirectional charger 111 included in the charging circuit 110 is large enough to simultaneously charge the battery cells 121 included in the two or more battery packs 120, the charging method of the battery may not be a serious issue. For example, when the power consumption of the bidirectional charger 111 cannot simultaneously charge the battery cells 121 included in two or more battery packs 120 like the case where the power consumption of the bidirectional charger 111 is 1kW (one kilo watt) and the charging power of the battery cells 121 is 1kW, an efficient charging method as described below is required.

When the charging signal is received, the battery processor 122 may sequentially perform the CC charging for each of a plurality of battery packs 120 according to a predefined order. When the CC charging for each of a plurality of battery packs 120 is completed, the battery processor 122 may simultaneously perform the CV charging for each of the plurality of battery packs 120.

In an embodiment, the battery processor 122 may sequentially perform the CC charging from the first battery pack 120-1 directly connected to the charging circuit 110, among the plurality of battery packs 120, to the second battery pack 120-2 disposed at an end in a direction opposite to the first battery pack 120-1. In addition, based on the CC charging for the second battery pack 120-2 being completed, the battery processor 122 may simultaneously perform CV charging for each of the plurality of battery packs 120.

Referring to FIG. 2, the main processor 112 may transmit a charging signal to the first battery processor 122 of the first battery pack 120-1 ("charging" in FIG. 2). When a charging signal is received from the main processor 112 through the connector 130 ("batt charging" in FIG. 2), the first battery processor 122-1 may transmit a switching signal for controlling the switching element 124 to the first battery management circuit 123-1 to perform the CC charging for the first battery pack 120-1 (see Q1, Q2 ON in FIG. 2).

When the CC charging for the first battery pack 120-1 is completed, the first battery processor 122-1 may receive state information (indicating that the CC charging for the first battery pack 120-1 is completed) from the first battery management circuit 123-1 ("battery information" in FIG. 2), and transmit a charging signal for starting charging of the second battery pack 120-2 to the second battery processor 122-2 of the second battery pack 120-2 ("next batt charging" in FIG. 2).

When the charging signal is received from the first battery processor 122-1("batt charging" in FIG. 2), the second battery processor 122-2 may perform the CC charging for the second battery pack 120-2 by performing an operation in the same manner as the first battery processor 122-1.

When the CC charging for the first battery pack 120-1 and for the second battery pack 120-2 are completed according to the above process as described above, since the second battery pack 120-2 is an end battery pack 120 (pack end in FIG. 2), and the first battery processor 122-1 of the first battery pack 120-1 and the second battery processor 122-2 of the second battery pack 120-2 may receive a CV charging signal for performing CV charging (new CV ON in FIG. 2). Thereafter, the first battery processor 122-1 and the second battery processor 122-2 may simultaneously perform the CV charging for the first battery pack 120-1 and the second battery pack 120-2 by transmitting a switching signal for controlling the switching element 124 to the first battery management circuit 123-1 and the second battery management circuit 123-2, respectively (see Q1, Q2 ON in FIG. 2).

When the discharging signal is received, the battery processor 122 may sequentially perform discharging from the second battery pack 120-2 to the first battery pack 120-1 according to a predefined order. For example, the CC charging for the plurality of battery packs 120 may be sequentially performed in the direction from the second battery pack 120-2 to the first battery pack 120-1, whereas discharging (that is, CC discharging) for the plurality of battery packs 120 may be sequentially performed in the direction of the second battery pack 120-2. However, this is merely an embodiment, and a charging order and a discharging order of the plurality of battery packs 120 may be variously defined.

Referring to FIG. 2, the main processor 112 may transmit a discharging signal to the second battery processor 122 of the second battery pack 120-2 ("discharging" in FIG. 2). When a charging signal is received from the main processor 112 through the connector 130 ("batt discharging" in FIG. 2), the second battery processor 122-2 may transmit a switching signal for controlling the switching element 124 to the second battery management circuit 123-2 (Q1, Q2 ON in FIG. 2) to perform discharge on the second battery pack 120-2.

When the discharging the second battery pack 120-2 is completed, the second battery processor 122-2 may receive state information indicating that the discharging the second battery pack 120-2 is completed from the second battery management circuit 123-2 (see battery information of FIG. 2), and transmit, to the first battery processor 122-1 of the first battery pack 120-1, a discharging signal ("next batt discharging" in FIG. 2) for starting the discharge of the first battery pack 120-1.

When the discharging signal is received from the second battery processor 122-2 ("batt charging" in FIG. 2), the first battery processor 122-1 may perform discharging the first battery pack 120-1 by performing an operation same as the operation of the second battery processor 122-2.

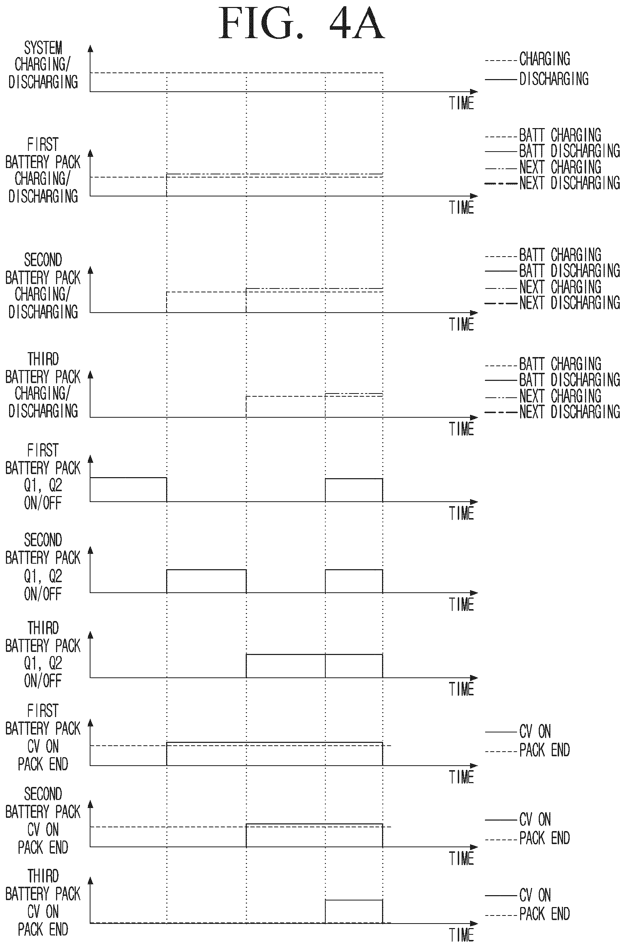

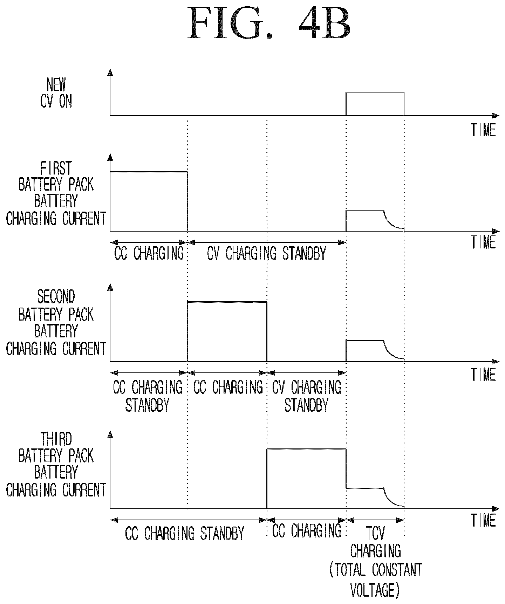

According to the disclosure, a charging process and a discharging process have been described above with reference to FIGS. 1 and 2. Details of the charging process and the discharging process will be described in more detail with reference to FIGS. 4 to 8, and hereinafter, embodiments related to providing state information according to the disclosure will be described.

The battery processor 122 may receive state information about the battery cell 121 from the battery management circuit 123 included in each of the plurality of battery packs 120, collect the state information, and transmit the collected state information to the main processor 112, and accordingly, the main processor 112 may provide the state information about the battery cell 121 to the user.

For example, the battery system 100 may include a communication interface including at least one of a Wi-Fi module, a Bluetooth module, a wireless communication module, an NFC module, and an Ultra Wide Band (UWB) module, and the main processor 112 may control a communication interface to transmit state information of the battery cell 121 to an external device. In this case, the state information of the battery cell 121 may be provided to a user through an external device.

In addition, the battery system 100 may include an output interface including a display and a speaker. In this case, the main processor 112 may control the display to display an image for the state information about the battery cell 121 or control the speaker to output a sound corresponding to the state information about the battery cell 121.

According to an embodiment, the battery processor 122 may receive, from the battery management circuit 123 (included in each of the plurality of battery packs 120), information about the remaining capacity of the battery cell 121 (included in each of the plurality of battery packs 120). Based on the received information about a remaining capacity of the battery cell 121 (included in each of the plurality of battery packs 120), the battery processor 122 may obtain information about total remaining capacity (indicating a remaining capacity of the total battery cell 121) by summing up information about the remaining capacity, and may transmit the information about the total remaining capacity through at least one connector 130 among the plurality of connectors 130 to the main processor 112 ("total battery capacity" in FIG. 2).

When information about the total residual capacity is received ("battery capacity" in FIG. 2), the main processor 112 may control a communication interface to transmit information about the total remaining capacity to an external device, and may control an output interface to provide information about the total remaining capacity.

In one embodiment, the battery processor 122 may receive, from the battery management circuit 123 (included in each of the plurality of battery packs 120), information about whether the battery cell 121 (included in each of the plurality of battery packs 120) has failed or not. When information about whether the battery cells 121 included in each of the plurality of battery packs 120 have failed is received, the battery processor 122 may transmit information about whether the fault has occurred, through at least one connector 130 among the plurality of connectors 130, to the main processor 112 ("new fault" in FIG. 2). For example, when a fault occurs in the second battery pack 120-2, the second battery processor 122 may transmit information of fault 1 to the first battery processor 122. In addition, the first battery processor 122 may transmit information of fault 2 by adding count 1 (one) to fault 1 (one) to the main processor 112.

When receiving information about the failure state ("fault" of FIG. 2), the main processor 112 may control a communication interface to transmit information about the failure state to an external device, and may control an output interface to provide the information about the failure state.

According to an embodiment described above with reference to FIGS. 1 and 2, the battery system 100 may efficiently charge or discharge the plurality of battery packs 120.

Specifically, the battery system 100 may not include the bidirectional charger 111 in each of the plurality of battery packs 120, thus the battery system 100 may charge and discharge the plurality of battery packs 120 by using only the bidirectional charger 111 included in the charging circuit 110. Accordingly, the battery system 100 may extend the battery pack 120 by using the inter-battery connector 130 without a dedicated battery connection cable.

In addition, the battery system 100 may, when CC charging for each of the plurality of battery packs 120 is completed, significantly reduce a charging time by simultaneously performing CV charging for all the plurality of battery packs 120.

In addition, the battery system 100 may effectively provide information about the failure of the battery pack 120 and the remaining capacity of the entire battery pack 120 to a user by obtaining state information about the plurality of battery packs 120 from the plurality of battery packs 120.

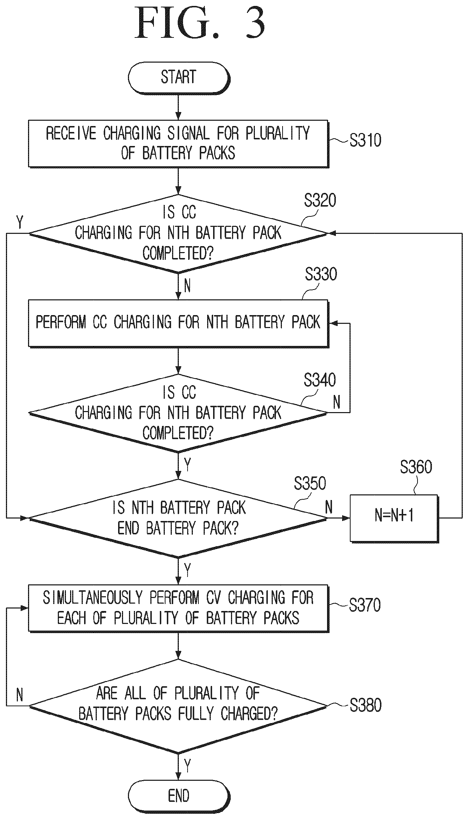

FIG. 3 is a flowchart illustrating a charging process according to an embodiment of the disclosure, FIGS. 4A and 4B are timing diagrams illustrating signals of a charging process according to an embodiment of the disclosure.

In FIGS. 3 to 4B, the battery system 100 includes the first battery pack 120-1 directly connected to the charging circuit 110; the second battery pack 120-2 directly connected to the first battery pack 120-1; and a third battery pack 120-3, which is the end battery pack 120, directly connected to the second battery pack 120-2.

In FIG. 3, the battery processor 122 may receive a charging signal for the plurality of battery packs 120 in operation S310. Specifically, when N = 1, the main processor 112 may transmit a charging signal to the first battery processor 122-1 of the first battery pack 120-1, and accordingly, the first battery processor 122-1 may receive a charging signal.

Referring to FIG. 4A, the main processor 112 may output the system charging signal to high, may output the system discharging signal to low, and accordingly, the first battery processor 122-1 may output the battery charging signal to high.

When a charging signal is received, the battery processor 122 may identify whether CC charging for the N^{th} battery pack 120 has been completed in operation S320. Specifically, the first battery processor 122-1 may obtain information about whether CC charging of the first battery pack 120-1 is completed through the first battery management circuit 123-1 of the first battery pack 120-1.

If CC charging for the N^{th} battery pack 120 is identified as being complete in operation S320 (Y, which means 'YES'), the battery processor 122 performs operation S350 as described below. If it is identified that CC charging for the N^{th} battery pack 120 is not completed in operation S320 (N, which means 'NO'), the battery processor 122 may perform CC charging for the N^{th} battery pack 120 in operation S330. Specifically, when it is identified that CC charging for the first battery pack 120-1 is not completed, the battery processor 122 may perform CC charging for the first battery pack 120-1.

Referring to FIG. 4A, the first battery processor 122 may output Q1, Q2 signals in the first battery pack 120-1 to high, and accordingly, as illustrated in FIG. 4B, the charging current of the first battery pack 120-1 may be maintained and the CC charging may be performed.

After CC charging is performed on the N^{th} battery pack 120, the battery processor 122 may identify whether CC charging for the N^{th} battery pack 120 is completed in operation S340. Specifically, the first battery processor 122 may obtain information about whether CC charging of the first battery pack 120 is completed through the first battery management circuit 123 of the first battery pack 120.

If it is identified that CC charging for the N^{th} battery pack 120 is not completed in operation S340 (N), CC charging for the N^{th} battery pack 120 may be maintained, whereas if CC charging for the N^{th} battery pack 120 is identified as complete in operation S340 (Y), the battery processor 122 may identify whether the N^{th} battery pack 120 is the end battery pack 120 in operation S350.

When it is identified that the N^{th} battery pack 120 is not the end battery pack 120 in operation S350, the battery processor 122 may increase the N value by 1 (one) in operation S360. Specifically, in the embodiment of FIGS. 3 and 4, since the first battery pack 120-1 is not the end battery pack 120, N = 2, and the second battery processor 122 may perform operations S320 to S350 for CC charging of the second battery pack 120-2.

Referring to FIG. 4A, the first battery processor 122 may output a Q1 signal and a Q2 signal to low, and as a result, CC charging may be stopped. In addition, the first battery processor 122 may output a "CV ON" signal of the first battery pack 120-1 to high. However, in this case, since the pack end signal of the first battery pack 120-1 is maintained at a high level, CV charging may not be performed until the new CV ON signal becomes high.

The first battery processor 122-1 may output a "next batt charging" signal of the first battery pack 120 as high, and accordingly, the second battery processor 122-2 may output a batt charging signal of the second battery pack 120-2 as high. In addition, when the batt charging signal of the second battery pack 120-2 becomes high, the second battery processor 122-2 may output Q1 and Q2 signals (in the second battery pack 120-2) as high, and as shown in FIG. 4B, CC charging may be performed while the charging current of the second battery pack 120-2 is maintained.

When CC charging for the second battery pack 120-2 is completed, the second battery pack 120-2 is not an end battery pack 120, so N=3, and the third battery processor 122-3 may perform steps S320 to S350 for CC charging of the third battery pack 120-3.

Referring to FIG. 4A, the second battery processor 122-2 may output a CV ON signal of the second battery pack 120-2 to high. However, in this case, since the pack end signal of the second battery pack 120-2 is maintained to high, CV charging may not be performed until the new CV ON signal becomes high.

The second battery processor 122-2 may output a "next batt charging" signal of the second battery pack 120-2 to high, and accordingly, the third battery processor 122-3 may output a batt charging signal of the third battery pack 120-3 to high. When the batt charging signal of the third battery pack 120-3 is high, the third battery processor 122-3 may output Q1 and Q2 signals in the third battery pack 120-3 to high, and as shown in FIG. 4B, CC charging may be performed while the charging current of the third battery pack 120-3 is maintained.

If it is identified that the N^{th} battery pack 120 is the end battery pack 120 in operation S350 (Y), the battery processor 122 may simultaneously perform CV charging for each of the plurality of battery packs 120 in operation S370. Specifically, CC charging for the first battery pack 120, the second battery pack 120-2, and the third battery pack 120 are sequentially performed to complete CC charging for the third battery pack 120-3, which is the end battery pack 120, and the battery processor 122 may simultaneously perform CV charging for each of the plurality of battery packs 120.

Referring to FIGS. 4A and 4B, when a new CV ON signal is high, the first battery processor 122-1, the second battery processor 122-2, and the third battery processor 122-3 (respectively included in the first battery pack 120, the second battery pack 120-2, and the third battery pack 120) may perform total constant voltage (TCV) charging by outputting Q1 and Q2 signals (in each of the battery pack 120) to high.

In other words, as the battery processor 122 according to the disclosure maintains low only for the pack end of the end battery pack 120 and the pack end of the other battery is maintained at high, the new CV ON is not high even when the CV ON of the battery pack 120 other than the end battery pack 120 is high. Then, when CV ON of the end battery pack 120 is high, a new CV ON becomes high and TCV charging of the total battery pack 120 may start.

As shown in FIG. 4, while CV charging is performed, the charging current of the first battery pack 120-1, the second battery pack 120-2, and the third battery pack 120-3 may be reduced to prevent overcurrent. Specifically, CC charging is performed by a current obtained by dividing a CC charging current of the bidirectional charger 111 by the battery pack 120 during an initial TCV charging, and CV charging is performed after a predetermined time.

The battery processor 122 may identify whether all of the plurality of battery packs 120 are fully charged in operation S380. When it is identified that all of the plurality of battery packs 120 are not fully charged in operation S380 (N), the CC charging for each of the plurality of battery packs 120 may be maintained, and if all of the plurality of battery packs 120 are identified as being fully charged in operation S380 (Y), the charging process for the plurality of battery packs 120 may be terminated.

As shown in FIG. 4A, when it is identified that all of the plurality of battery packs 120 are fully charged, each battery processor 122 may output Q1 and Q2 signals to low, and transmit a signal indicating that all of the plurality of battery packs 120 are fully charged to the main processor 112, thereby enabling the system charging signal to be output to low.

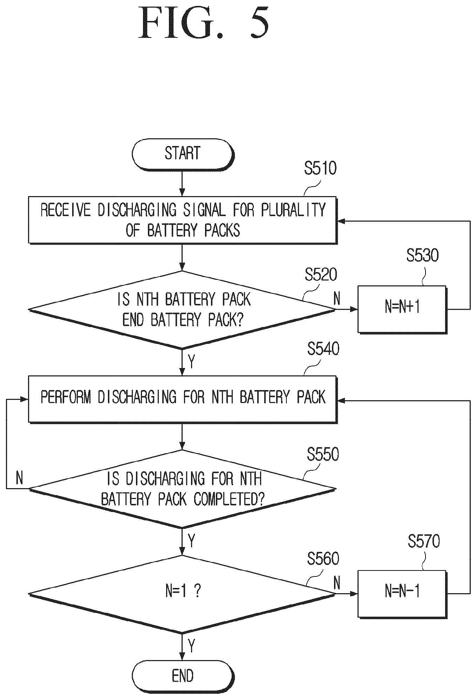

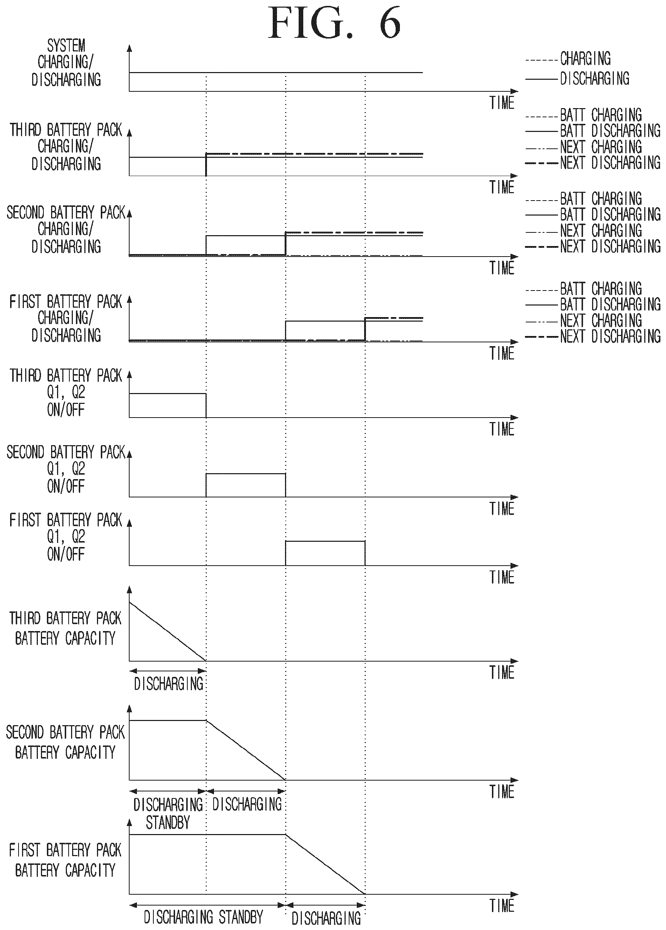

FIG. 5 is a flowchart illustrating a discharge process according to an embodiment of the disclosure. FIG. 6 is a timing diagram illustrating signals of a discharging process according to an embodiment of the disclosure.

In the description of FIGS. 5 and 6, the battery system 100 includes the first battery pack 120-1 directly connected to the charging circuit 110, the second battery pack 120-2 directly connected to the first battery pack 120-1, and the third battery pack 120-3 which is the end battery pack 120, directly connected to the second battery pack 120-2.

As illustrated in FIG. 5, the battery processor 122 may receive a discharging signal for the plurality of battery packs 120 in operation S510. In addition, the battery processor 122 may identify whether the N^{th} battery pack 120 is the end battery pack 120 in operation S520.

If it is identified that the N^{th} battery pack 120 is not the end battery pack 120 in operation S520, the battery processor 122 may increase the N value by 1 until an N value becomes a value corresponding to (or indicating) the end battery pack 120 in operation S530. When it is identified that the N^{th} battery pack 120 is the end battery pack 120, the battery processor 122 may discharge the end battery pack 120 in operation S540.

In the example of FIGS. 5 and 6, since the third battery pack 120-3 is the end battery pack 120, discharging the third battery pack 120-3 from among the plurality of battery packs 120 may be performed first. Referring to FIG. 6, the main processor 112 may output a system 'discharging' signal to high and output a system 'charging' signal to low, and accordingly, the third battery processor 122-3 may output a batt discharging signal to high.

In addition, the third battery processor 122-3 may output Q1, Q2 signals in the third battery pack 120-3 to high, and accordingly, as illustrated in FIG. 6, discharging may be performed while the battery capacity for the third battery pack 120-3 is reduced at a constant speed.

After discharging the N^{th} battery pack 120, the battery processor 122 may identify whether the discharging the N^{th} battery pack 120 is completed in operation S550. When it is identified that the discharging the N^{th} battery pack 120 is completed, the battery processor 122 may identify whether N is 1 (one) in operation S560. If it is identified that N is not 1 (one), that is, N is greater than 1 (one) in operation S560, the battery processor 122 may decrease the N value by 1 (one) until an N value becomes 1 (one) corresponding to the battery pack 120 directly connected to the charging circuit 110 in operation S570. When it is identified that N is 1 (one) as a result of the identification in operation S560 (Y), the battery processor 122 may terminate the discharging process.

Specifically, in the example of FIGS. 5 and 6, since the second battery pack 120-2 is directly connected to the third battery pack 120-3, discharging the second battery pack 120-2 may be performed after the discharging the third battery pack 120 is completed.

Referring to FIG. 6, the third battery processor 122-3 may output Q1 and Q2 signals of the third battery pack 120-3 to low, and may also output a next batt discharging signal of the third battery pack 120-3 to high. Accordingly, the second battery processor 122-2 may output a batt discharging signal of the second battery pack 120-2 to high. When the batt discharging signal of the second battery pack 120-2 is high, the second battery processor 122-2 may output Q1 and Q2 signals in the second battery pack 120-2 to high, and as shown in FIG. 6, discharging may be performed while the battery capacity of the second battery pack 120-2 is reduced at a constant speed.

After the discharging the second battery pack 120-2 is completed, the discharging process of the first battery pack 120-1 may also be performed in the same manner as the discharging process of the third battery pack 120-3 and the second battery pack 120-2. As shown in FIG. 6, when the discharging the total battery pack 120 is completed by completing the discharging the first battery pack 120-1, each battery processor 122 may transmit a signal indicating that the entire plurality of battery packs 120 are discharged to the main processor 112, so that the system discharging signal is outputted as low.

In other words, as the battery processor 122 according to the disclosure maintains low only for the pack end of the end battery pack 120 and the pack end of the other battery maintains high, if the main processor 112 outputs discharging to high, the battery processor 122 may start discharging from the third battery pack 120-3 which is the end battery pack 120. This considers that the end battery pack 120 is easily replaced when the lifespan of the battery pack 120 is reached. According to an embodiment, different discharging orders may be applied. When discharging from the end battery pack 120 is performed, it is also possible to charge with an external quick charger by removing the end battery pack 120 while the battery system 100 is used after the discharging the end battery pack 120 is completed.

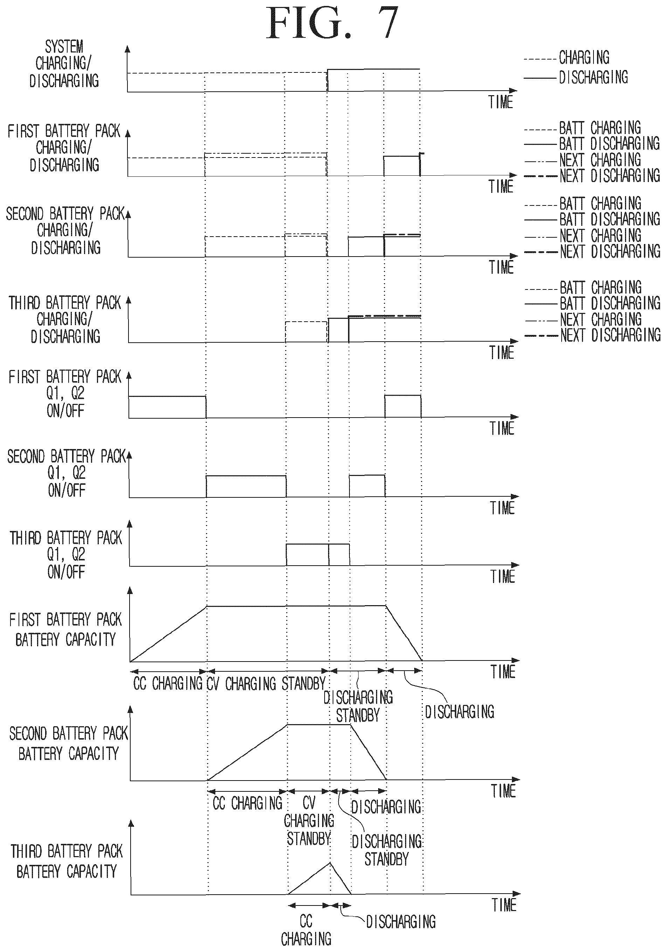

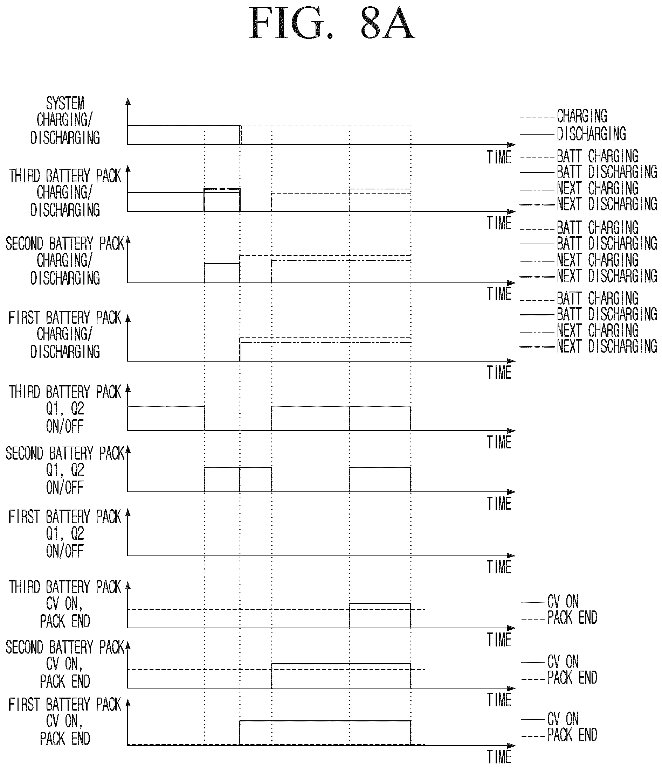

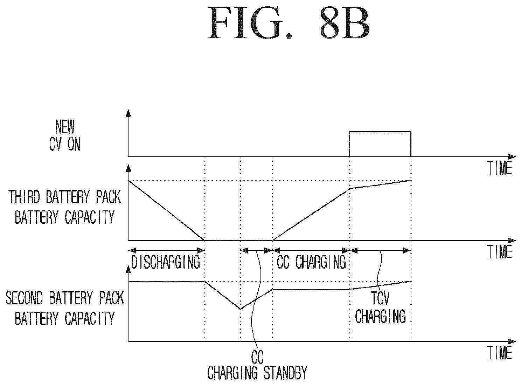

FIG. 7 is a timing diagram illustrating a discharging process during charging according to an embodiment of the disclosure. FIGS. 8A and 8B are timing diagrams illustrating a charging process during discharge according to an embodiment of the disclosure.

In the description of FIGS. 7, 8A, and 8B, in the same manner as the descriptions regarding FIGS. 3 to 6, the battery system 100 includes the first battery pack 120-1 directly connected to the charging circuit 110, the second battery pack 120-2 directly connected to the first battery pack 120, and the third battery pack 120-3 which is the end battery pack 120 directly connected to the second battery pack 120-2.

The description of FIGS. 7, 8A, and 8B is only for describing the embodiment when discharging during charging or charging is performed during discharging. The embodiments described above with reference to FIGS. 1 to 6 may be applied to the individual charging process and discharging process described in the embodiment of FIGS. 7 to 8B. Accordingly, redundant descriptions of the same contents as those described in the embodiments of FIGS. 1 to 6 will be omitted.

As shown in FIG. 7, a discharging signal for performing a discharging process may be received while a charging process according to the disclosure is performed. Specifically, FIG. 7 illustrates the timing of signals when a discharging signal is received while the CC charging for the third battery pack 120-3 is performed after the CC charging for the first battery pack 120-1 and the second battery pack 120-2 is completed.

First, the main processor 112 may output a system charging signal to high and output a system discharging signal to low, and accordingly, a charging process as described above with reference to FIGS. 3, 4A, and 4B may be performed. Specifically, in the charging process, Q1, Q2 signals for each of the first battery pack 120-1, the second battery pack 120-2, and the third battery pack 120-3 are sequentially output to high, so that CC charging for each of the first battery pack 120-1, the second battery pack 120-2, and the third battery pack 120-3 may be sequentially performed.

While CC charging for the third battery pack 120-3 is performed, the main processor 112 may output a system charging signal to low and output a system discharging signal to high, and accordingly, a discharging process as described above with reference to FIGS. 5 and 6 may be performed. Specifically, discharging each of the third battery pack 120-3, the second battery pack 120-2, and the first battery pack 120-1 may be sequentially performed during a discharging process. That is, in the discharging process, Q1 and Q2 signals for each of the third battery pack 120-3, the second battery pack 120-2, and the first battery pack 120-1 are sequentially output to high, thereby sequentially discharging the third battery pack 120-3, the second battery pack 120-2, and the first battery pack 120-1.

As shown in FIGS. 8A and 8B, a charging signal for performing a charging process may be received while a discharging process according to the disclosure is performed. Specifically, FIGS. 8A and 8B show the timing of signals when a charging signal is received while discharging the second battery pack 120-2 is performed after the discharging the third battery pack 120 is completed.

First of all, the main processor 112 may output the system discharging signal to high, output the system charging signal to low, and accordingly, with reference to FIGS. 5 and 6, the discharging process as described above may be performed.

In an embodiment, in the discharging process, Q1, Q2 signals for each of the third battery pack 120-3, the second battery pack 120-2, and the first battery pack 120-1 may be sequentially output to high, and discharging each of the third battery pack 120-3, the second battery pack 120-2, and the first battery pack 120-1 may be sequentially performed.

While discharging the second battery pack 120-2 is performed, the main processor 112 may output a system charging signal to high and output a system discharging signal to low, and accordingly, a charging process as described above with reference to FIGS. 3 to 4B may be performed.

Specifically, CC charging for each of the first battery pack 120-1, the second battery pack 120-2, and the third battery pack 120-3 may be sequentially performed in a charging process, and CV charging for all of the plurality of battery packs 120 may be simultaneously performed after CC charging is completed. That is, the discharging each of the first battery pack 120-1, the second battery pack 120-2, and the third battery pack 120-3 may be sequentially performed by sequentially outputting Q1 and Q2 signals for each of the first battery pack 120-1, the second battery pack 120-2, and the third battery pack 120-3 to high in the charging process.

In the example of FIGS. 8A and 8B, since the charging signal is received while the discharging the second battery pack 120-2 is performed, the discharging the first battery pack 120-1 is not started, and thus, the first battery pack 120-1 may be maintained in a fullycharged state. Therefore, Q1 and Q 2 signals for the first battery pack 120-1 may be maintained low, and CC charging for the second battery pack 120 and the third battery pack 120-3 may be sequentially performed. Thereafter, when the CC charging for the third battery pack 120-3 is completed, the first battery pack 120-1 is fully charged, and thus, CV charging for the second battery pack 120-2 and the third battery pack 120-3 may be simultaneously performed.

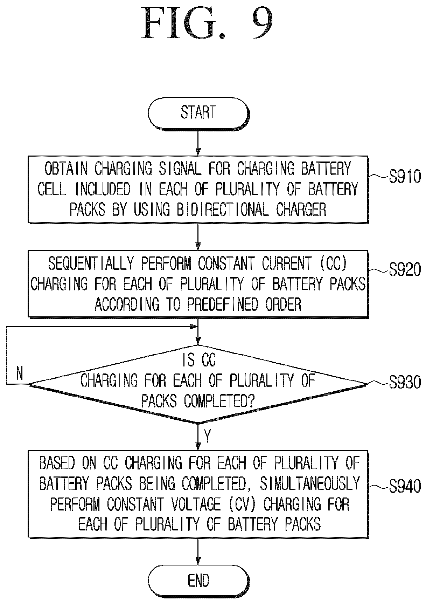

FIG. 9 is a flowchart illustrating a method of controlling a battery system according to an embodiment of the disclosure.

As described above, the battery system 100 according to the disclosure may include the charging circuit 110 including the bidirectional charger 111 and a plurality of battery packs 120 including each of the battery cells 121.

Referring to FIG. 9, the battery system 100 may obtain a charging signal for charging the battery cell 121 included in each of the plurality of battery packs 120 by using the bidirectional charger 111 in operation S910. When the charging signal is obtained, the battery system 100 may sequentially perform CC charging for each of the plurality of battery packs 120 based on a predefined order in operation S920.

The battery system 100 may identify whether CC charging for each of the plurality of battery packs 120 has been completed in operation S930. When it is identified that CC charging is not completed for each of the plurality of battery packs 120, the battery system 100 may perform CC charging for the battery pack 120 in which CC charging is not completed among the plurality of battery packs 120. When it is identified that CC charging for each of the plurality of battery packs 120 is completed, CV charging for each of the plurality of battery packs 120 may be simultaneously performed in operation S940.

In an embodiment, the CC charging may be sequentially performed from the first battery pack 120-1 directly connected to the charging circuit 110, among the plurality of battery packs 120, to the second battery pack 120-2 disposed at an end in a direction opposite to the first battery pack 120-1 among the plurality of battery packs 120. In addition, based on the CC charging for the second battery pack 120-2 being completed, the battery system 100 may perform CV charging for each of the plurality of battery packs 120.

In an embodiment, the battery system 100 may obtain a discharging signal for charging the battery cells 121 (included in each of the plurality of battery packs 120) by using the bidirectional charger 111. When a discharging signal is obtained, the battery system 100 may sequentially discharge from the second battery pack 120-2, which is the end battery pack 120 among the plurality of battery packs 120, to the first battery pack 120-1 connected to the charging circuit 110 among the plurality of battery packs 120.

According to the aforementioned embodiment, a method of the battery system 100 may be implemented as a program and provided to the battery system 100. In particular, a program including the controlling method of the battery system 100 may be stored in a non-transitory computer readable medium and provided.

In an embodiment, in a non-transitory computer-readable recordable medium including a program to execute a method of controlling the battery system 100, wherein the battery system 100 includes the charging circuit 110 including the bidirectional charger 111 and the plurality of battery packs 120 (each including the battery cell 121), and the method of controlling the battery system 100 may include receiving a charging signal to charge the battery cell 121 included in each of the plurality of battery packs 120 using the bidirectional charger 111, based on receiving the charging signal, sequentially performing constant current (CC) charging of each of the plurality of battery packs 120 based on a predefined order, and based on the CC charging of the plurality of battery packs 120 being completed, simultaneously performing constant voltage (CV) charging of each of the plurality of battery packs 120.

The method of the battery system 100 and the computer-readable recording medium including the program for executing the control method of the battery system 100 have been briefly described above, but this is only to omit the redundant description, and one or more embodiments of the battery system 100 may be applied to a computer-readable recording medium including a control method of the battery system 100 and a program for executing the control method of the battery system 100.

According to one or more embodiments of the disclosure as described above, the battery system 100 may efficiently perform charging and discharging the plurality of battery packs 120.

Specifically, the battery system 100 does not include the bidirectional charger 111 in each of the plurality of battery packs 120, may charge and discharge the plurality of battery packs 120 by using only the bidirectional charger 111 included in the charging circuit 110, and may extend the battery pack 120 by using the inter-battery connector 130 without a dedicated battery connection cable.

In addition, when CC charging for each of a plurality of packs 120 is completed, the battery system 100 may significantly reduce charging time by simultaneously performing CV charging for entire plurality of battery packs 120.

In addition, the battery system 100 may effectively provide information about the failure of the battery pack 120 and the remaining capacity of the entire battery pack 120 to a user by obtaining state information about the plurality of battery packs 120 from the plurality of battery packs 120.

The machine-readable storage medium may be provided in the form of a non-transitory storage medium. The, "non-transitory" storage medium may not include a signal (e.g., electromagnetic wave) and is tangible, but does not distinguish whether data is permanently or temporarily stored in a storage medium. For example, the "non-transitory storage medium" may include a buffer in which data is temporarily stored

According to one or more embodiments, a method disclosed herein may be provided in a computer program product. A computer program product may be traded between a seller and a purchaser as a commodity. A computer program product may be distributed in the form of a machine readable storage medium (e.g., compact disc ROM (CD-ROM)) or distributed online through an application store (e.g., PlayStore^{™}) or distributed (e.g., download or upload) online between two user devices (e.g., smartphones) directly. In the case of on-line distribution, at least a portion of the computer program product (e.g., a downloadable app) may be stored temporarily or at least temporarily in a storage medium such as a manufacturer's server, a server in an application store, or a memory in a relay server.

In addition, each of the components (e.g., modules or programs) according to one or more embodiments may include a single entity or a plurality of entities, and some sub-components of the sub-components described above may be omitted, or other sub-components may be further included in the one or more embodiments. Alternatively or additionally, some components (e.g., modules or programs) may be integrated into one entity to perform the same or similar functions performed by the respective components prior to the integration.

The operations performed by the module, the program, or other component, in accordance with one or more embodiments may be performed in a sequential, parallel, iterative, or heuristic manner, or at least some operations may be executed in a different order or omitted, or other operations may be added.

The term "unit" or "module" used in the disclosure includes units includes hardware, software, or firmware, or any combination thereof, and may be used interchangeably with terms such as, for example, logic, logic blocks, parts, or circuits. A "unit" or "module" may be an integrally constructed component or a minimum unit or part thereof that performs one or more functions. For example, the module may be configured as an application-specific integrated circuit (ASIC).

Embodiments may be implemented as software that includes instructions stored in machine-readable storage media readable by a machine (e.g., a computer). A device may call instructions from a storage medium and that is operable in accordance with the called instructions, including an electronic device (e.g., the battery system 100).

When the instruction is executed by a processor, the processor may perform the function corresponding to the instruction, either directly or under the control of the processor, using other components. The instructions may include a code generated by a compiler or a code executed by an interpreter.

The description of the embodiments of the disclosure is intended to be illustrative, and not to limit the scope of the claims, and many alternatives, modifications, and variations will be apparent to those skilled in the art. While one or more embodiments have been described with reference to the figures, it will be understood by those of ordinary skill in the art that various changes in form and details may be made therein without departing from the spirit and scope as defined by the following claims and their equivalents.

## Claims

1. A battery system comprising:
a charging circuit comprising a bidirectional charger and a main processor; and
a plurality of battery packs,
wherein each of the plurality of battery packs comprises a battery cell and a battery processor,
wherein the main processor is configured to transmit, by using the bidirectional charger, to the battery processor of each of the plurality of battery packs, a charging signal to charge the battery cell of each of the plurality of battery packs,
wherein the battery processor is configured to:
based on receiving the charging signal, sequentially perform constant current (CC) charging of each of the plurality of battery packs according to a predefined order, and
based on the CC charging of the plurality of battery packs being completed, simultaneously perform constant voltage (CV) charging of each of the plurality of battery packs.

2. The battery system of claim 1, wherein the plurality of battery packs comprises a first battery pack directly connected to the charging circuit and a second battery pack disposed at an end in a direction opposite to the first battery pack, and
wherein the battery processor is further configured to:
sequentially perform the CC charging of each of the plurality of battery packs from the first battery pack to the second battery pack, and
based on the CC charging for the second battery pack being completed, simultaneously perform CV charging for each of the plurality of battery packs.

3. The battery system of claim 2, wherein each of the plurality of battery packs comprises a battery management circuit configured to obtain information about a state of the battery cell, and
wherein the battery processor is further configured to perform the CC charging and the CV charging by transmitting, to the battery management circuit, a switching signal to control a switching element connected to the battery cell.

4. The battery system of claim 3, wherein the charging circuit and the plurality of battery packs are serially connected through a plurality of connectors, and each of the plurality of connectors comprises a plurality of signal connection lines.

5. The battery system of claim 4, wherein a discharging signal for discharging the battery cell of each of the plurality of battery packs is transmitted to the plurality of battery packs through at least one connector among the plurality of connectors, and
wherein the battery processor is further configured to, based on receiving the discharging signal, sequentially perform discharging of each of the plurality of battery packs from the second battery pack to the first battery pack.

6. The battery system of claim 4, further comprising a communication interface,
wherein the battery processor is further configured to:
based on receiving, from the battery management circuit, information about a remaining capacity of the battery cell of each of the plurality of battery packs, by summing up the information about the remaining capacity of the battery cell, obtain information about total remaining capacity indicating a remaining capacity of a total battery cell by summing up the information about the remaining capacity of the battery cell,
transmit, to the main processor, the information about the total remaining capacity through at least one connector among the plurality of connectors, and
wherein the main processor is further configured to control the communication interface to transmit the information about the total remaining capacity to an external device.

7. The battery system of claim 4, further comprising a communication interface,
wherein the battery processor is further configured to:
after receiving, from the battery management circuit, information about whether the battery cell of each of the plurality of battery packs has failed, transmit, to the main processor, information about whether a failure occurs in the battery cell through at least one connector among the plurality of connectors, and
wherein the main processor is further configured to control the communication interface to transmit the information about whether the failure occurs to an external device.

8. A method of controlling a battery system, wherein the battery system comprises a charging circuit comprising a bidirectional charger and a main processor, and a plurality of battery packs each comprising a battery cell and a battery processor, the method comprising:
receiving a charging signal to charge the battery cell of each of the plurality of battery packs by using the bidirectional charger;
based on receiving the charging signal, sequentially performing constant current (CC) charging of each of the plurality of battery packs based on a predefined order; and
based on the CC charging of the plurality of battery packs being completed, simultaneously performing constant voltage (CV) charging of each of the plurality of battery packs.

9. The method of claim 8, wherein the plurality of battery packs comprises a first battery pack directly connected to the charging circuit and a second battery pack disposed at an end in a direction opposite to the first battery pack,
wherein the performing the CC charging comprises sequentially performing the CC charging of each of the plurality of battery packs from the first battery pack to the second battery pack, and
wherein the performing the CV charging comprises, based on the CC charging for the second battery pack being completed, simultaneously performing CV charging for each of the plurality of battery packs.

10. The method of claim 9, wherein each of the plurality of battery packs further comprises a battery management circuit configured to obtain information about a state of the battery cell, and
wherein the performing the CC charging further comprises performing the CC charging by transmitting, to the battery management circuit, a switching signal to control a switching element connected to the battery cell, and
wherein the performing the CV charging comprises performing the CC charging by transmitting the switching signal to the battery management circuit.

11. The method of claim 10, wherein the charging circuit and the plurality of battery packs are serially connected through a plurality of connectors comprising a plurality of signal connection lines.

12. The method of claim 11, further comprising:
receiving a discharging signal to discharge the battery cell of each of the plurality of battery packs, using the bidirectional charger; and
based on receiving the discharging signal, sequentially performing discharging of each of the plurality of battery packs from the second battery pack to the first battery pack.

13. The method of claim 11, wherein the method further comprises:
receiving, from the battery management circuit of each of the plurality of battery packs, information about a remaining capacity of the battery cell of each of the plurality of battery packs;
obtaining information about total remaining capacity indicating a remaining capacity of a total battery cell by summing up information about the remaining capacity of each of the plurality of battery packs; and
transmitting, to an external device, the information about the total remaining capacity.

14. The method of claim 11, wherein the method further comprises:
receiving, from the battery management circuit of each of the plurality of battery packs, information about whether the battery cell of each of the plurality of battery packs has failed, and
transmitting, to an external device, information about whether a failure occurs in the battery cell.
